# EUROPÄISCHE PATENTSCHRIFT

(11) **EP 2 598 354 B1**
(45) Veröffentlichungstag und Bekanntmachung des Hinweises auf die Patenterteilung: **03.09.2014**
(21) Anmeldenummer: 11736005.7
(22) Anmeldetag: 21.07.2011
(51) Int. Cl.: B60H 1/34, F24F 13/14

(54) **VERFAHREN ZUR HERSTELLUNG EINES BEDIENELEMENTS FÜR EINEN LUFTAUSSTRÖMER, BEDIENELEMENT FÜR EINEN LUFTAUSSTRÖMER, LUFTAUSSTRÖMER**
METHOD FOR PRODUCING A CONTROL ELEMENT FOR AN AIR-DIFFUSER, CONTROL ELEMENT FOR AN AIR-DIFFUSER, AND AIR-DIFFUSER
PROCÉDÉ DE FABRICATION D'UN ÉLÉMENT DE COMMANDE POUR UN DIFFUSEUR À AIR, ÉLÉMENT DE COMMANDE POUR UN DIFFUSEUR À AIR, DIFFUSEUR À AIR

(30) Priorität: 26.07.2010 DE 102010032231
(43) Veröffentlichungstag der Anmeldung: 05.06.2013
(73) Patentinhaber: TRW Automotive Electronics & Components GmbH, 78315 Radolfzell (DE)
(72) Erfinder: NOICHL, Harald, 67677 Enkenbach-Alsenborn (DE); KOBER, Steve, 08233 Treuen (DE)
(74) Vertreter: Prinz & Partner
(86) Internationale Anmeldenummer: PCT/EP2011/003667
(87) Internationale Veröffentlichungsnummer: WO 2012/013317

(56) Entgegenhaltungen:
- DE-A1-102009 013 256
- DE-U1-202004 008 181
- DE-U1-202007 008 676
- US-A1- 2006 014 485
- US-A1- 2008 119 124

## Beschreibung

Die Erfindung betrifft ein Verfahren zur Herstellung eines Bedienelements für einen Luftausströmer. Die Erfindung betrifft ferner ein Bedienelement für einen Luftausströmer. Außerdem betrifft die Erfindung einen Luftausströmer, insbesondere für ein Kraftfahrzeug.

Ein Luftausströmer mit einem auf einer horizontalen Lamelle angeordneten Bedienelement zur Steuerung eines Luftstroms ist beispielsweise aus der DE 10 2006 012 473 A1 bekannt. Das Bedienelement dient zum einen dem Schwenken der Lamelle um deren Längsachse und zum anderen der Beeinflussung des Luftstroms bezüglich dessen horizontaler Richtung.

Ist eine Verschiebbarkeit eines solchen Bedienelements auf einer Lamelle vorgesehen, kann ein Lagerkissen aus einem weichen Material vorgesehen sein. Das Lagerkissen erfordert als separates Bauteil jedoch einen zusätzlichen Montageschritt. Außerdem kann ein Einleger aus Metall in dem Griffteil des Bedienelements eingesetzt werden, um eine höhere Wertigkeit zu vermitteln. Auch der Einleger erfordert einen zusätzlichen Montageschritt.

In der DE 20 2004 008 181 U1 ist ein Verfahren zur Herstellung eines Bedienelements für einen Luftausströmer mit den Merkmalen des Oberbegriffs des Anspruchs 1 beschrieben, und es ist ein Luftausströmer für ein Kraftfahrzeug mit den Merkmalen des Oberbegriffs des Anspruchs 12 gezeigt. Ein auf einer Lamelle längsverschiebbar angeordneter, die Lamelle insgesamt umgreifender Reiter besteht aus einer vorderen Teilschale sowie einer hinteren Teilschale und ist mit einer Dekorleiste und Grifflaschen versehen. Der Reiter wird in zwei aufeinander folgenden Arbeitsschritten hergestellt: Zunächst wird die vordere Teilschale aus einem ersten Kunststoff gespritzt. Danach wird ein galvanisch bearbeitbarer Kunststoff in die vordere Teilschale eingespritzt, aus dem die Leiste und die Grifflaschen ausgeformt werden. Anschließend werden die Leiste und die Grifflaschen in einem galvanischen Bad mit einer metallischen Schicht überzogen. Es kommen nur ein innerer Abschnitt der vorderen Teilschale und die hintere Teilschale in Kontakt mit der Lamelle.

Aufgabe der Erfindung ist es, die Montage eines Bedienelements mit guten Gleiteigenschaften auf einer Lamelle eines Luftausströmers zu vereinfachen.

Gelöst wird diese Aufgabe durch ein Verfahren mit den Merkmalen des Anspruchs 1. Vorteilhafte und zweckmäßige Ausgestaltungen des erfindungsgemäßen Verfahrens sind in den Unteransprüchen angegeben.

Das erfindungsgemäße Verfahren zur Herstellung eines Bedienelements für einen Luftausströmer umfasst folgende Schritte:
- Herstellen eines ersten Teilelements aus einer Hartkomponente in einem ersten Spritzgussvorgang, und
- Herstellen eines zweiten Teilelements aus einer Weichkomponente in einem zweiten Spritzgussvorgang.

Gemäß der Erfindung bildet das zweite Teilelement ein Gleitlager für eine Lagerung des Bedienelements auf einer Lamelle des Luftausströmers. Bei seiner Herstellung wird das zweite Teilelement durch Anhaften und/oder durch geometrische Formgebung mit dem ersten Teilelement verbunden. Wenn das erste Teilelement selbst aus mehreren Einzelteilen besteht, wird das zweite Teilelement mit wenigstens einem dieser Einzelteile verbunden.

Die Erfindung beruht auf der Erkenntnis, dass für das Lager ein weiches Material mit guten Gleiteigenschaften zum Verschieben des Bedienelements auf der Lamelle von Vorteil ist. Die Erfindung sieht ein Bedienelement mit unterschiedlich harten Teilelementen vor, wobei das weiche Teilelement das Lager bildet. Das weiche Teilelement wird bereits bei der Herstellung mit dem harten Teilelement verbunden und bildet mit diesem eine vorgefertigte, "werkzeugfallende" Einheit. Da kein separates Lagerkissen in das Bedienelement eingefügt werden muss, verringern sich Bauteileanzahl und Montageaufwand.

Gemäß einer ersten Alternative können die beiden Teilelemente zusammen in einem Zwei-Komponenten-Spritzgussverfahren (2K-Verfahren) hergestellt werden. Wie bei einem solchen Verfahren üblich, wird die Materialpaarung für die beiden Teilelemente so gewählt, dass diese gut aneinander haften.

Gemäß einer zweiten Alternative können die beiden Teilelemente zusammen in einem In-Mold-Assembly-Verfahren (IMA-Verfahren) hergestellt werden. In diesem Fall sind die geometrischen Formen der beiden Teilelemente so gewählt, dass sie nach dem Spritzgussprozess unverlierbar miteinander verbunden sind, ohne dass hierfür ein Anhaften notwendig ist. Auch hier ist nach dem Spritzgießen kein Zusammenbau der beiden Teilelemente erforderlich.

Selbstverständlich können die beiden Alternativen auch miteinander kombiniert werden.

Silikone sind sehr beständige Materialien und haben sehr gute Gleiteigenschaften. Deshalb umfasst die Weichkomponente für das zweite Teilelement, welches das Lager bildet, vorzugsweise ein Silikon.

Alternativ kann die Weichkomponente für das zweite Teilelement ein thermoplastisches Elastomer umfassen. Thermoplastische Elastomere sind elastisch und eignen sich gut für Spritzgussverfahren.

Besonders vorteilhaft ist eine Ausgestaltung des erfindungsgemäßen Bedienelements, bei der die Weichkomponente einen Großteil der Oberfläche des Bedienelements bildet. Das zweite Teilelement dient in diesem Fall nicht nur als Lager, sondern sorgt zudem für eine angenehme Haptik beim Bedienen.

Die Hartkomponente für das erste Teilelement, das härter als das zweite Teilelement ist, kann einen Kunststoff mit einem Metalleffekt umfassen.

Der Vorteil eines solchen Materials für die Hartkomponente kommt besonders dann zum Ausdruck, wenn der zweite Spritzgussvorgang so durchgeführt wird, dass ein Ende des ersten Teilelements sichtbar bleibt. Die sichtbare Metalloptik wertet das Bedienelement auf, ohne dass hierfür - wie bislang üblich - ein separater Metalleinleger oder -clip notwendig wäre.

Gemäß einer bevorzugten Ausführungsform des erfindungsgemäßen Verfahrens wird der zweite Spritzgussvorgang in einem Spritzgusswerkzeug mit einem Kernzug durchgeführt, der um eine definierte Länge gezogen wird, um einen Kanal im ersten Teilelement freizugeben, durch den die Weichkomponente in das Innere des ersten Teilelements zur Bildung des Lagers vordringen kann.

Um die Montage auf einer horizontalen Lamelle zu vereinfachen, kann das erste Teilelement des Bedienelements aus mehreren Einzelteilen bestehen, einschließlich eines Hinterteils, das zur Anbringung an einer Lamellenrückseite vorgesehen ist, und eines Vorderteils, das zur Anbringung an einer Lamellenvorderseite vorgesehen ist.

Bei einer solchen Ausgestaltung kann das zweite Teilelement bei seiner Herstellung entweder mit dem Hinterteil oder mit dem Vorderteil des ersten Teilelements verbunden werden.

Gegenstand der Erfindung ist auch ein Bedienelement für einen Luftausströmer mit den Merkmalen des Anspruchs 12. Das erfindungsgemäße Bedienelement umfasst ein erstes Teilelement aus einer Hartkomponente und ein zweites Teilelement aus einer Weichkomponente, das ein Gleitlager für eine Lagerung des Bedienelements auf einer Lamelle des Luftausströmers bildet. Das zweite Teilelement haftet am ersten Teilelement an und/oder ist durch geometrische Formgebung mit dem ersten Teilelement unverlierbar verbunden und bildet so eine vorgefertigte Einheit.

Die Erfindung schafft auch einen Luftausströmer, insbesondere für ein Kraftfahrzeug, mit den Merkmalen des Anspruchs 13. Der erfindungsgemäße Luftausströmer umfasst mehrere verstellbare Lamellen zur Beeinflussung eines Luftstroms sowie ein auf einer der Lamellen angeordnetes erfindungsgemäßes Bedienelement.

Weitere Merkmale und Vorteile ergeben sich aus der nachfolgenden Beschreibung und aus den beigefügten Zeichnungen, auf die Bezug genommen wird. In den Zeichnungen zeigen:
- Figur 1 eine perspektivische Vorder-/Seitenansicht eines erfindungsgemäßen Bedienelements nach einer ersten Ausführungsform;
- Figur 2 eine perspektivische Rückansicht des Bedienelements aus Figur 1;
- Figur 3 eine Schnittansicht des zweiten Teilelements des Bedienelements aus Figur 1;
- Figur 4 eine perspektivische, geschnittene Seitenansicht des Bedienelements aus Figur 1 auf einer Lamelle;
- Figur 5 eine Explosionsansicht eines erfindungsgemäßen Bedienelements nach einer zweiten Ausführungsform mit einer Lamelle;
- Figur 6 eine perspektivische Vorderansicht des Hinterteils des ersten Teilelements und des zweiten Teilelements des Bedienelements aus Figur 5;
- Figur 7 eine perspektivische Rückansicht eines Details aus Figur 5;
- Figur 8 eine perspektivische, geschnittene Draufsicht eines Details aus Figur 5;
- Figur 9 eine perspektivische Rückansicht des Vorderteils des ersten Teilelements und des zweiten Teilelements eines erfindungsgemäßen Bedienelements nach einer dritten Ausführungsform;
- Figur 10 eine perspektivische Seitenansicht des ersten Teilelements aus Figur 9;
- Figur 11 eine perspektivische Vorderansicht des ersten Teileiements gemäß einer Variante der dritten Ausführungsform;
- Figur 12 eine perspektivische, geschnittene Draufsicht auf ein Detail des Vorderteils des ersten Teilelements und das zweite Teilelement aus Figur 9;
- Figur 13 eine perspektivische Rückansicht des Vorderteils des ersten Teilelements und des zweiten Teilelements eines erfindungsgemäßen Bedienelements nach einer vierten Ausführungsform; und
- Figur 14 eine perspektivische, geschnittene Draufsicht auf das Vorderteil des ersten Teilelements und das zweite Teilelement aus Figur 13.

In der nachfolgenden Beschreibung der bevorzugten Ausführungsformen der Erfindung sind die Angaben vorne, hinten, horizontal, vertikal, etc. auf die übliche und dem Fachmann bekannte Einbausituation eines Luftausströmers in einem Kraftfahrzeug bezogen, wobei zum Beispiel der Begriff Vorderseite die dem zu belüftenden Innenraum zugewandte Seite bezeichnet.

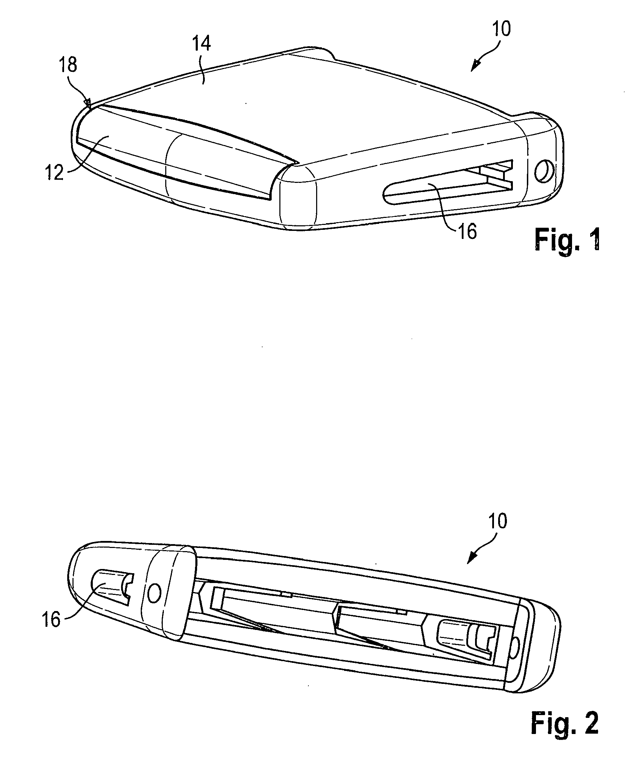

In den Figuren 1 und 2 ist eine erste Ausführungsform eines Bedienelements 10 für einen Luftausströmer gezeigt. Das Bedienelement 10 besteht im Wesentlichen aus zwei Teilelementen 12, 14, die miteinander verbunden sind. Ein flacher Durchgang 16 erstreckt sich quer von einer Seite zur entgegengesetzten Seite durch das gesamte Bedienelement 10.

Das erste Teilelement 12 ist nahezu vollständig vom zweiten Teilelement 14 umgeben, insbesondere in dem Bereich, den der Benutzer bei der Bedienung anfasst. Durch eine Aussparung 18 des zweiten Teilelements 14 an der Vorderseite des Bedienelements 10 ist das vordere Ende des ersten Teilelements 12 jedoch sichtbar.

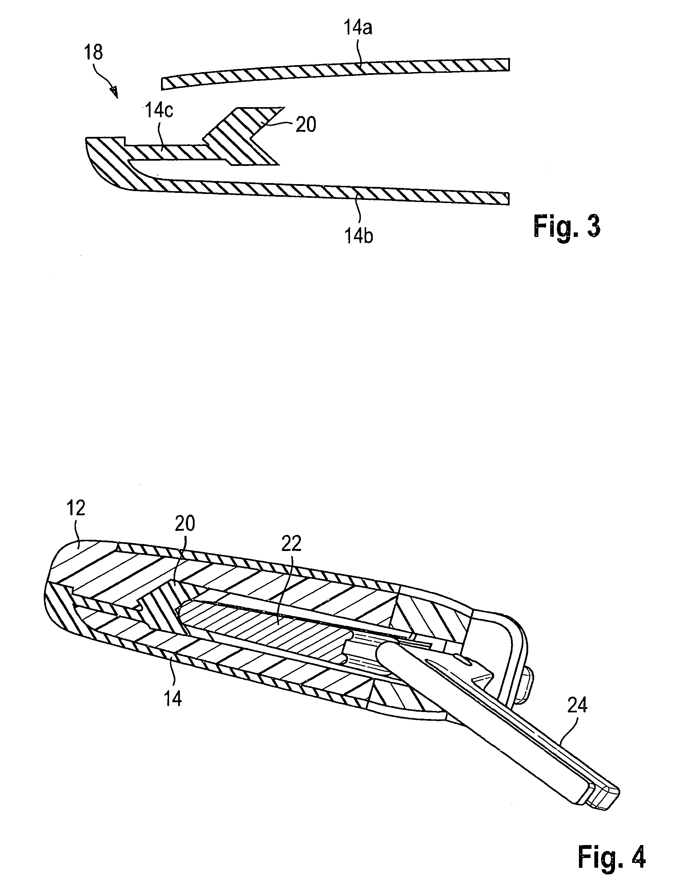

Wie in Figur 3 zu erkennen ist, weist das zweite Teilelement 14 neben einem oberen Abschnitt 14a und einem unteren Abschnitt 14b noch einen mittleren Abschnitt 14c auf, der sich von einem nach oben gezogenen vorderen Bereich des unteren Abschnitts 14b nach innen erstreckt. Der mittlere Abschnitt 14c bildet ein Lager 20, genauer gesagt ein Gleitlager in Form eines Pads, für eine Lagerung des Bedienelements 10 auf einer horizontalen Lamelle des Luftausströmers.

In Figur 4 ist das Bedienelement 10 auf einer horizontalen Lamelle 22 des Luftausströmers montiert gezeigt. Die flache Lamelle 22 ragt durch den Durchgang 16 des Bedienelements 10 und stützt sich vorderseitig am Lager 20 ab. Das Bedienelement 10 ist in horizontaler Richtung auf der Lamelle 22 verschiebbar. Mittels Rastarmen 24 kann das Bedienelement 10 an eine (nicht gezeigte) vertikale Lamelle des Luftausströmers geclipst werden, wodurch die Verschiebbarkeit in horizontaler Richtung in begrenztem Umfang erhalten bleibt.

Das erste Teilelement 12 besteht aus einer spritzgussfähigen Hartkomponente, insbesondere aus einem Kunststoff mit einem Metalleffekt. Da das vordere Ende des ersten Teilelements 12 durch die Aussparung 18 sichtbar ist, wirkt das Bedienelement 10 hochwertiger als ein reines Kunststoff-Bedienelement. Das zweite Teilelement 14 besteht aus einer spritzgussfähigen Weichkomponente, insbesondere aus einem Silikon oder einem thermoplastischen Elastomer mit guten Haptik- und Gleiteigenschaften.

Die Verbindung der beiden Teilelemente 12, 14 miteinander erfolgt bereits bei deren Herstellung. Die beiden Teilelemente 12, 14 können im Rahmen eines Zwei-Komponenten-Spritzgussverfahrens (2K-Verfahren) nacheinander gespritzt werden, wobei die Materialien so gewählt sind, dass eine gute Haftung des zweiten Teilelements 14 am ersten Teilelement 12 gewährleistet ist. Beim zweiten Spritzgussvorgang wird ein Kernzug des Spritzgusswerkzeugs um eine definierte Länge gezogen, um einen Kanal im ersten Teilelement 12 freizugeben, durch den die Weichkomponente in das Innere des ersten Teilelements 12 zur Bildung des Lagers 20 vordringen kann.

Die beiden Teilelemente 12, 14 können alternativ auch in In-Mold-Assembly-Technik (IMA-Technik) miteinander verbunden hergestellt werden. Die Formen der beiden Teilelemente 12, 14 sind in diesem Fall so gewählt, dass sie nach dem Spritzgießen der beiden Teilelemente 12, 14 unverlierbar miteinander verbunden sind, ohne dass hierfür ein Anhaften zwingend notwendig ist. Dennoch kann durch entsprechende Materialwahl ein Anhaften die Verbindung unterstützen.

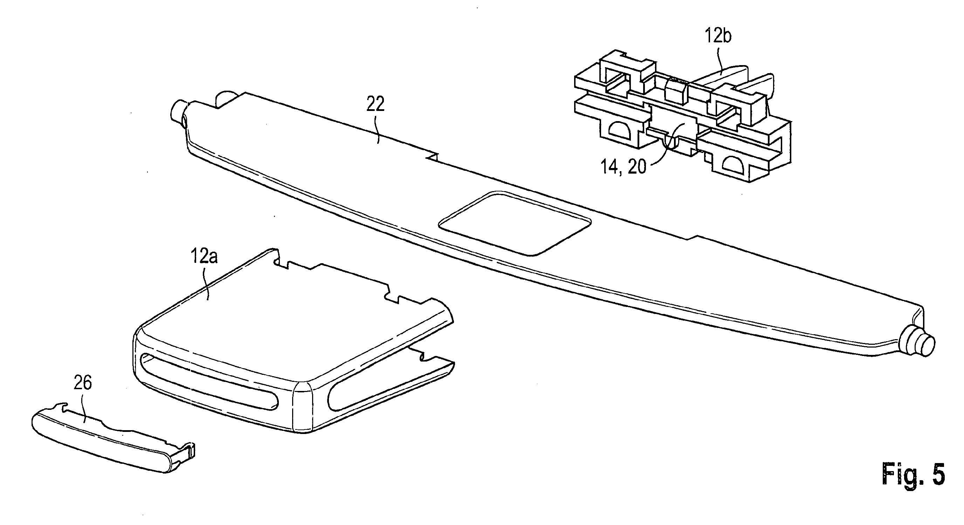

Eine zweite Ausführungsform des Bedienelements 10 ist in den Figuren 5 bis 8 dargestellt. Wie aus Figur 5 hervorgeht, besteht hier das erste Teilelement 12 aus mehreren Einzelteilen, nämlich einem Vorderteil 12a, das zur Anbringung an der Vorderseite der horizontalen Lamelle 22 vorgesehen ist, und einem Hinterteil 12b, das zur Anbringung an der Rückseite der Lamelle 22 vorgesehen ist. Außerdem umfasst das Bedienelement 10 noch einen Chromeinsatz 26.

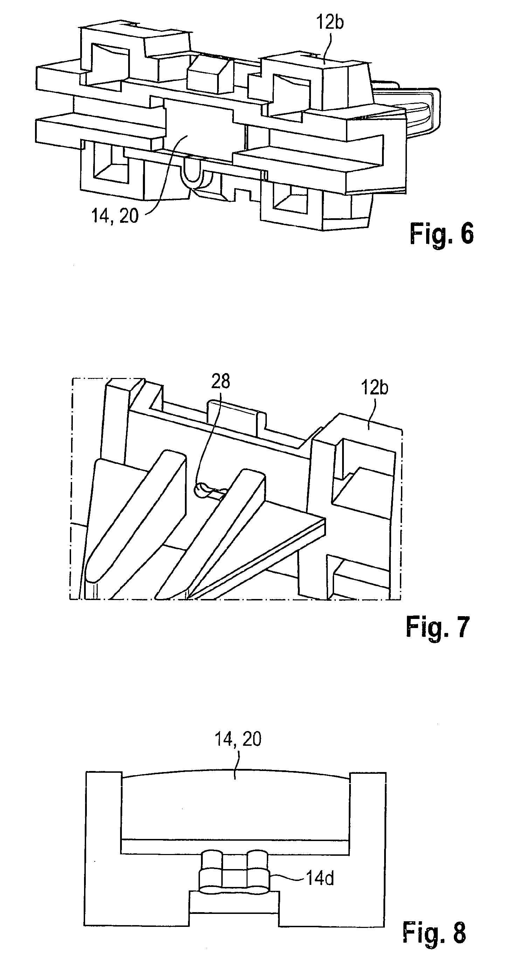

Bei der zweiten Ausführungsform ist das zweite Teilelement 14 mit dem Hinterteil 12b des ersten Teilelements 12 verbunden, wie am besten in Figur 6 zu sehen ist. Die Verbindung kann wiederum durch ein Zwei-Komponenten-Spritzgussverfahren mit gut aneinander haftenden Materialien und/oder in IMA-Technik durch entsprechende Formgebung des Hinterteils 12b und des zweiten Teilelements 14 erreicht werden. Da bei dieser Ausführungsform der separate Chromeinsatz 26 vorgesehen ist, muss die Hartkomponente für das erste Teilelement 12 keinen Metalleffekt aufweisen.

Figur 7 zeigt eine Öffnung 28 im Hinterteil 12b des ersten Teilelements 12, durch die die Weichkomponente von der Rückseite her durchgespritzt wird. Figur 8 zeigt das zweite Teilelement 14 mit einer gemäß der IMA-Technik vorgesehenen Verdickung 14d auf der Rückseite der Öffnung 28 des Hinterteils 12b. Die Verdickung 14d ist größer bzw. hat eine andere Kontur als die Öffnung 28, sodass das zweite Teilelement 14 nicht nach vorne herausfallen kann, wenn es nicht am Hinterteil 12b anhaftet.

Die Montage des Bedienteils 10 sieht ein Einclipsen des Chromeinsatzes 26 in das Vorderteil 12a des ersten Teilelements vor, sowie ein Aufstecken des Vorderteils auf die Vorderseite der Lamelle 22 und ein Aufstecken des Hinterteils 12b mit dem zweiten Teilelement 14 auf die Rückseite der Lamelle 22, wobei das Vorderteil 12a und das Hinterteil 12b durch eine Rastverbindung miteinander verbunden werden. Das fertige Bedienteil 10 ist dann dank des zweiten Teilelements 14, welches das Gleitlager 20 in Form eines Kissens bildet, horizontal auf der Lamelle 22 verschiebbar.

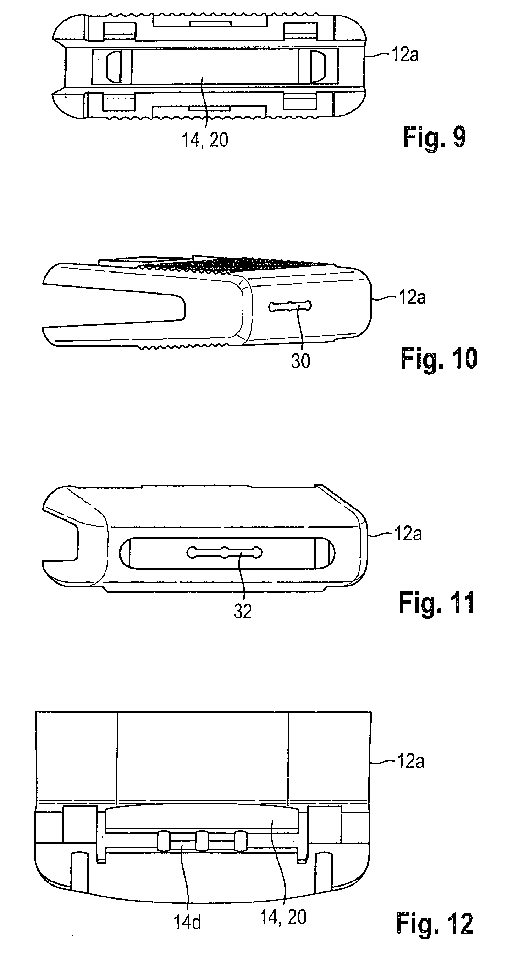

Die in den Figuren 9 bis 12 gezeigte dritte Ausführungsform des Bedienelements 10 unterscheidet sich von der zweiten Ausführungsform insbesondere dadurch, dass das zweite Teilelement 14 nicht mit dem Hinterteil 12b, sondern mit dem Vorderteil 12a des ersten Teilelements 12 verbunden ist. Das Lager 20 befindet sich wiederum im Inneren des ersten Teilelements 12 und ist der Vorderseite der horizontalen Lamelle 22 zugewandt.

Die Weichkomponente für das zweite Teilelement 14 kann entweder durch eine seitliche Öffnung 30 im Vorderteil 12a (siehe Figur 10) oder eine vorderseitige Öffnung 32 des Vorderteils 12a (siehe Figur 11) eingespritzt werden. Figur 12 zeigt das zweite Teilelement 14, das durch die Öffnung 32 auf der Vorderseite des Vorderteils 12a gespritzt wurde und auf der Vorderseite der Öffnung 32 gemäß der IMA-Technik mit einer Verdickung 14d in Form eines Stegs versehen ist. Die Verdickung 14d entspricht nicht der Form der Öffnung 32, sodass ein Herausfallen des zweiten Teilelements 14 aus dem Vorderteil 12a verhindert wird.

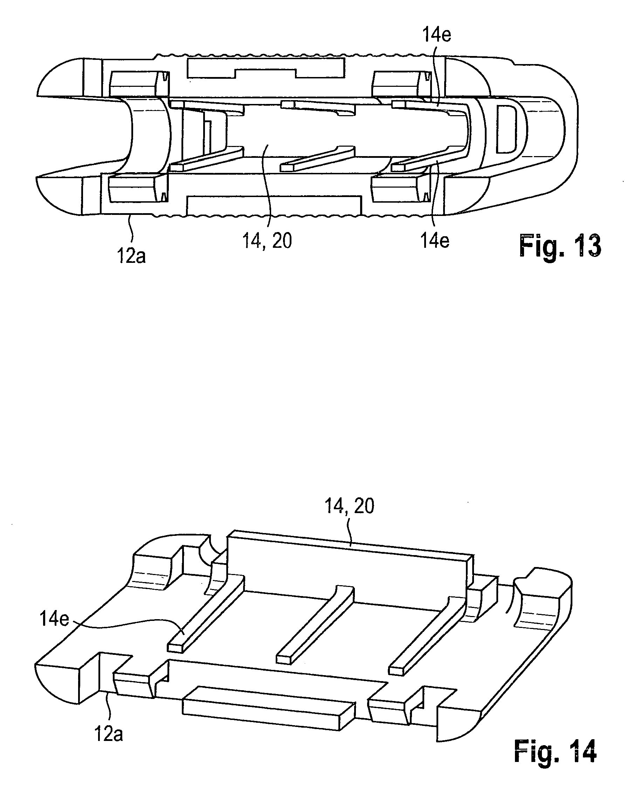

Die in den Figuren 13 und 14 gezeigte vierte Ausführungsform des Bedienelements 10 entspricht weitgehend der dritten Ausführungsform mit dem Unterschied, dass das zweite Teilelement 14 mehrere Rippen 14e aufweist, die sich in horizontaler Richtung quer zur Längsachse der horizontalen Lamelle 22 erstrecken. Die Rippen 14e dienen vornehmlich der Einstellung der Verschiebekraft und des Bewegungsverhaltens des Bedienelements 10 auf der Lamelle 22.

Grundsätzlich ist es bei allen Ausführungsformen möglich, das Bedienelement 10 mittels der Rastarme 24 auch an einer horizontalen Lamelle 22 zu befestigen und auf einer vertikalen Lamelle verschiebbar zu lagern. In diesem Fall ergibt sich im Wesentlichen eine um 90° gedrehte Orientierung des Bedienelements 10.

### Bezugszeichenliste

- 10: Bedienelement
- 12: erstes Teilelement
- 12a: Vorderteil
- 12b: Hinterteil
- 14: zweites Teilelement
- 14a: oberer Abschnitt
- 14b: unterer Abschnitt
- 14c: mittlerer Abschnitt
- 14d: Verdickung
- 14e: Rippen
- 16: Durchgang
- 18: Aussparung
- 20: Lager
- 22: Lamelle
- 24: Rastarme
- 26: Chromeinsatz
- 28: Öffnung im Hinterteil
- 30: seitliche Öffnung im Vorderteil
- 32: vorderseitige Öffnung im Vorderteil

## Patentansprüche

1. Verfahren zur Herstellung eines Bedienelements (10) für einen Luftausströmer, mit folgenden Schritten:
- Herstellen eines ersten Teilelements (12) in einem ersten Spritzgussvorgang,
- Herstellen eines zweiten Teilelements (14) in einem zweiten Spritzgussvorgang,
wobei das zweite Teilelement (14) bei seiner Herstellung durch Anhaften und/oder durch geometrische Formgebung mit dem ersten Teilelement (12) verbunden wird,
**dadurch gekennzeichnet, dass**
das erste Teilelement (12) aus einer Hartkomponente und das zweite Teilelement (14) aus einer Weichkomponente hergestellt wird, und
das zweite Teilelement (14) ein Lager (20) für eine Lagerung des Bedienelements (10) auf einer Lamelle (22) des Luftausströmers bildet.

2. Verfahren nach Anspruch 1, **dadurch gekennzeichnet, dass** die beiden Teilelemente (12, 14) zusammen in einem 2-Komponenten-Spritzgussverfahren hergestellt werden.

3. Verfahren nach Anspruch 1 oder 2, **dadurch gekennzeichnet, dass** die beiden Teilelemente (12, 14) zusammen in einem In-Mold-Assembly-Verfahren hergestellt werden.

4. Verfahren nach einem der vorhergehenden Ansprüche, **dadurch gekennzeichnet, dass** die Weichkomponente für das zweite Teilelement (14) ein Silikon umfasst.

5. Verfahren nach einem der Ansprüche 1 bis 3, **dadurch gekennzeichnet, dass** die Weichkomponente für das zweite Teilelement (14) ein thermoplastisches Elastomer umfasst.

6. Verfahren nach einem der vorhergehenden Ansprüche, **dadurch gekennzeichnet, dass** die Weichkomponente einen Großteil der Oberfläche des Bedienelements (10) bildet.

7. Verfahren nach einem der vorhergehenden Ansprüche, **dadurch gekennzeichnet, dass** die Hartkomponente für das erste Teilelement (12) einen Kunststoff mit einem Metalleffekt umfasst.

8. Verfahren nach Anspruch 7, **dadurch gekennzeichnet, dass** der zweite Spritzgussvorgang so durchgeführt wird, dass ein Ende des ersten Teilelements (12) sichtbar bleibt.

9. Verfahren nach einem der vorhergehenden Ansprüche, **dadurch gekennzeichnet, dass** der zweite Spritzgussvorgang in einem Spritzgusswerkzeug mit einem Kernzug durchgeführt wird, der um eine definierte Länge gezogen wird, um einen Kanal im ersten Teilelement (12) freizuhalten, durch den die Weichkomponente in das Innere des ersten Teilelements (12) zur Bildung des Lagers (20) vordringen kann.

10. Verfahren nach einem der vorhergehenden Ansprüche, **dadurch gekennzeichnet, dass** das erste Teilelement (12) aus mehreren Einzelteilen besteht, einschließlich eines Hinterteils (12b), das zur Anbringung an einer Lamellenrückseite vorgesehen ist, und eines Vorderteils (12a), das zur Anbringung an einer Lamellenvorderseite vorgesehen ist, wobei das zweite Teilelement (14) bei seiner Herstellung mit dem Hinterteil (12b) des ersten Teilelements (12) verbunden wird.

11. Verfahren nach einem der Ansprüche 1 bis 9, **dadurch gekennzeichnet, dass** das erste Teilelement (12) aus mehreren Einzelteilen besteht, einschließlich eines Hinterteils (12b), das zur Anbringung an einer Lamellenrückseite vorgesehen ist, und eines Vorderteils (12a), das zur Anbringung an einer Lamellenvorderseite vorgesehen ist, wobei das zweite Teilelement (14) bei seiner Herstellung mit dem Vorderteil (12a) des ersten Teilelements (12) verbunden wird.

12. Bedienelement für einen Luftausströmer, mit
einem ersten Teilelement (12) und
einem zweiten Teilelement (14), wobei das zweite Teilelement (14) am ersten Teilelement (12) anhaftet und/oder durch geometrische Formgebung mit dem ersten Teilelement (12) unverlierbar verbunden ist und so eine vorgefertigte Einheit bildet,
**dadurch gekennzeichnet, dass**
das erste Teilelement (12) aus einer Hartkomponente und das zweite Teilelement (14) aus einer Weichkomponente gebildet ist, und
das zweite Teilelement (14) ein Lager (20) für eine Lagerung des Bedienelements (10) auf einer Lamelle (22) des Luftausströmers bildet.

13. Luftausströmer, insbesondere für ein Kraftfahrzeug, mit mehreren verstellbaren Lamellen zur Beeinflussung eines Luftstroms, **gekennzeichnet durch** ein auf einer der Lamellen (22) angeordnetes Bedienelement (10) nach Anspruch 12.

## Claims

1. A method of manufacturing an operating element (10) for an air vent, comprising the following steps:
- manufacturing a first partial element (12) in a first injection molding process,
- manufacturing a second partial element (14) in a second injection molding process,
the second partial element (14) being connected with the first partial element (12) by adhesion and/or by geometric shaping during its manufacture,
**characterized in that**
the first partial element (12) is manufactured from a hard component and the second partial element (14) is manufactured from a soft component, and
the second partial element (14) forms a bearing (20) for a support of the operating element (10) on a vane (22) of the air vent.

2. The method according to claim 1, **characterized in that** the two partial elements (12, 14) are manufactured together in a two-component injection molding process.

3. The method according to claim 1 or 2, **characterized in that** the two partial elements (12, 14) are manufactured together in an in-mold assembly process.

4. The method according to any of the preceding claims, **characterized in that** the soft component for the second partial element (14) comprises a silicone.

5. The method according to any of claims 1 to 3, **characterized in that** the soft component for the second partial element (14) comprises a thermoplastic elastomer.

6. The method according to any of the preceding claims, **characterized in that** the soft component forms a major part of the surface of the operating element (10).

7. The method according to any of the preceding claims, **characterized in that** the hard component for the first partial element (12) comprises a plastic material with a metallic effect.

8. The method according to claim 7, **characterized in that** the second injection molding process is carried out such that an end of the first partial element (12) remains visible.

9. The method according to any of the preceding claims, **characterized in that** the second injection molding process is carried out in an injection molding die having a core puller that is pulled by a defined length to keep a channel in the first partial element (12) free, to allow the soft component to advance through the channel into the interior of the first partial element (12) to form the bearing (20).

10. The method according to any of the preceding claims, **characterized in that** the first partial element (12) is made up of a plurality of individual parts, including a rear part (12b) provided for mounting to a vane rear side and a front part (12a) provided for mounting to a vane front side, the second partial element (14) being connected with the rear part (12b) of the first partial element (12) during its manufacture.

11. The method according to any of claims 1 to 9, **characterized in that** the first partial element (12) is made up of a plurality of individual parts, including a rear part (12b) provided for mounting to a vane rear side and a front part (12a) provided for mounting to a vane front side, the second partial element (14) being connected with the front part (12a) of the first partial element (12) during its manufacture.

12. An operating element for an air vent, comprising
a first partial element (12) and
a second partial element (14), the second partial element (14) adhering to the first partial element (12) and/or being captively connected with the first partial element (12) by geometric shaping and thus constituting a prefabricated unit,
**characterized in that**
the first partial element (12) is formed from a hard component and the second partial element (14) is formed from a soft component, and
the second partial element (14) forms a bearing (20) for a support of the operating element (10) on a vane (22) of the air vent.

13. An air vent, in particular for a motor vehicle, comprising a plurality of adjustable vanes for controlling an air flow, **characterized by** an operating element (10) according to claim 12 that is arranged on one of the vanes (22).

## Revendications

1. Procédé de fabrication d'un élément de commande (10) pour un diffuseur d'air, comprenant les étapes suivantes :
- fabrication d'un premier élément partiel (12) dans un premier processus de moulage par injection,
- fabrication d'un deuxième élément partiel (14) dans un deuxième processus de moulage par injection,
le deuxième élément partiel (14) étant relié au premier élément partiel (12) lors de sa fabrication par adhésion et/ou par façonnage géométrique,
**caractérisé en ce que**
le premier élément partiel (12) est fabriqué à partir d'un composant dur et le deuxième élément partiel (14) à partir d'un composant souple, et
**en ce que** le deuxième élément partiel (14) forme un palier (20) pour un logement de l'élément de commande (10) sur une lamelle (22) du diffuseur d'air.

2. Procédé selon la revendication 1, **caractérisé en ce que** les deux éléments partiels (12, 14) sont fabriqués ensemble selon un procédé de moulage par injection à deux composants.

3. Procédé selon la revendication 1 ou 2, **caractérisé en ce que** les deux éléments partiels (12, 14) sont fabriqués ensemble selon un procédé d'assemblage dans le moule.

4. Procédé selon l'une des revendications précédentes, **caractérisé en ce que** le composant souple pour le deuxième élément partiel (14) comprend une silicone.

5. Procédé selon l'une des revendications 1 à 3, **caractérisé en ce que** le composant souple pour le deuxième élément partiel (14) comprend un élastomère thermoplastique.

6. Procédé selon l'une des revendications précédentes, **caractérisé en ce que** le composant souple constitue une majeure partie de la surface de l'élément de commande.

7. Procédé selon l'une des revendications précédentes, **caractérisé en ce que** le composant dur pour le premier élément partiel (12) comprend une matière plastique avec un effet métallisé.

8. Procédé selon la revendication 7, **caractérisé en ce que** le deuxième processus de moulage par injection est réalisé de telle sorte qu'une extrémité du premier élément partiel (12) reste visible.

9. Procédé selon l'une des revendications précédentes, **caractérisé en ce que** le deuxième processus de moulage par injection est réalisé dans un outil de moulage par injection avec un tire-noyau qui est tiré d'une longueur définie pour laisser libre un canal dans le premier élément partiel (12), à travers lequel le composant souple peut pénétrer à l'intérieur du premier élément partiel (12) pour former le palier (20).

10. Procédé selon l'une des revendications précédentes, **caractérisé en ce que** le premier élément partiel (12) est composé de plusieurs parties individuelles y compris une partie arrière (12b) qui est prévue pour le montage sur une face arrière de lamelle, et une partie avant (12a) qui est prévue pour le montage sur une face avant de lamelle, le deuxième élément partiel (14) étant relié à la partie arrière (12b) du premier élément partiel (12) lors de sa fabrication.

11. Procédé selon l'une des revendications 1 à 9, **caractérisé en ce que** le premier élément partiel (12) est composé de plusieurs parties individuelles y compris une partie arrière (12b) qui est prévue pour le montage sur une face arrière de lamelle, et une partie avant (12a) qui est prévue pour le montage sur une face avant de lamelle, le deuxième élément partiel (14) étant relié à la partie avant (12a) du premier élément partiel (12) lors de sa fabrication.

12. Elément de commande pour un diffuseur d'air, comportant
un premier élément partiel (12) et
un deuxième élément partiel (14), le deuxième élément partiel (14) adhérant au premier élément partiel (12) et/ou étant relié de manière imperdable au premier élément partiel (12) par façonnage géométrique et formant ainsi une unité préfabriquée,
**caractérisé en ce que**
le premier élément partiel (12) est réalisé à partir d'un composant dur et le deuxième élément partiel (14) à partir d'un composant souple, et
**en ce que** le deuxième élément partiel (14) forme un palier (20) pour un logement de l'élément de commande (10) sur un lamelle (22) du diffuseur d'air.

13. Diffuseur d'air, en particulier pour véhicule automobile, comportant plusieurs lamelles réglables pour influencer un flux d'air, **caractérisé par** un élément de commande (10) selon la revendication 12 agencé sur l'une des lamelles (22).
